# EUROPEAN PATENT SPECIFICATION

(11) **EP 1 200 176 B1**
(45) Date of publication and mention of the grant of the patent: **23.04.2003**
(21) Application number: 00940402.1
(22) Date of filing: 16.06.2000
(51) Int. Cl.: B01D 53/50, B01D 53/83

(54) **METHOD AND APPARATUS FOR DESULPHURISATION OF EXHAUST GASES**
VERFAHREN UND VORRICHTUNG ZUR ENTSCHWEFELUNG VON ABGASEN
PROCEDE ET APPAREIL DE DESULFURATION DE GAZ D'ECHAPPEMENT

(30) Priority: 18.06.1999 DK 86799
(43) Date of publication of application: 02.05.2002
(73) Proprietor: F L Smidth & Co. A/S, 2500 Valby Copenhagen (DK)
(72) Inventor: THOMSEN, Kent, DK-2500 Valby Copenhagen (DK); HUNDEBOL, Soren, DK-2500 Valby Copenhagen (DK)
(74) Representative: Brunner, Michael John
(86) International application number: EP0005880
(87) International publication number: WO00078435

(56) References cited:
- EP-A- 0 228 111
- EP-A- 0 845 443
- WO-A-93/10884
- DE-A- 3 643 143
- US-A- 4 634 583

## Description

The present invention relates to a method and apparatus for desulphurisation of exhaust gases from a cement making plant by bonding gaseous sulphur dioxide to calcium-containing cement raw meal which is extracted from the calcination stage of the plant and subsequently brought into contact with the exhaust gases as a sulphur-absorbing reactant.

A method of this kind is known from US-A-4,634,583. The disadvantage of this known method is its low efficiency. This is due to the fact that the particle size of the calcined raw meal which Is introduced into the exhaust gases is relatively large, causing its surface area to be reduced correspondingly. Therefore, this known method requires much more raw meal than is theoretically required, leading to an unnecessary waste of heat since the extracted raw meal is cooled from a temperature range between 850 and 950° to a temperature range of 220 - 250°C.

It is the object of the present invention to provide a method and apparatus by means of which the mentioned disadvantage is reduced.

According to the invention there is provided a method for desulphurisation of exhaust gases from a cement making plant by bonding gaseous sulphur dioxide to calcium-containing cement raw meal which has been extracted from the calcination stageof the plant, slaked and subsequently brought into contact with the exhaust gases as a sulphur-absorbing reactant, which method includes pre-heating the raw meal in a preheater prior to burning in a kiln, characterized in that the extracted raw meal is ground prior to being brought into contact with the exhaust gases in the preheater at a location, viewed in the direction of flow of the exhaust gases, immediately after SO₂ has been formed by partial combustion of the sulphide constituents in the raw materials.

An improvement of the thermal economy is thereby obtained by reducing the quantity of raw meal required for the desulphurisation process. This is ascribable to the fact that by subjecting the raw meal to slaking and grinding, the fineness of the raw meal will be improved, thereby enhancing the efficiency of the desulphurisation process. Tests conducted have indicated that a reduction of the particle size of the reactant will enhance the efficiency of the desulphurisation process.

It is preferred that a substantial amount of the calcium oxide (CaO) contained in the extracted raw meal is converted into calcium hydroxide (Ca(OH)₂), due to the greater capability of the latter to bond sulphur dioxide (SO₂). According to the invention it is therefore preferred that the extracted, calcined raw meal is subjected to minimum 80 per cent slaking, and preferably full-scale slaking. The percentage of slaking is determined to be equal to (1 - free CaO after slaking/free CaO before slaking) x 100, where free CaO is reported on an ignition-loss free basis as is conventional.

Since a reduction in the particle size of the reactant will raise the efficiency of the desulphurisation process, it is furtherpreferred that the extracted, calcined raw meal is ground to an average particle size of less than 5 µm, preferably of less than 3 µm.

The invention also includes apparatus for desulphurisation of exhaust gases from a cement making plant as defined in appended claim 8, having means for slaking and for grinding the extracted raw meal prior to bringing it into contact with the exhaust gases.

It is particularly in cases where sulphides, such as pyrite (FeS₂), are incorporated in the raw materials that the exhaust gases from the cement making plant contains SO₂. SO₂ is formed by partial oxidation for example of FeS₂, at around 550°C. Furthermore, the highest efficiency of desulphurisation when using extracted raw meal is achieved at high temperatures. In a traditional cement making plant comprising a preheater with five cyclone stages, the formation of SO₂ from sulphide-containing raw materials will typically take place in the inlet duct for the third cyclone stage and in that cyclone stage itself. In such a plant it is preferred that the extracted raw meal is introduced into the exhaust gases in the exhaust gas discharge duct from the third cyclone stage or at a subsequent location. In actual practice, SO₂ measuring equipment will be used to establish exactly where SO₂ is formed, with the decision concerning the location of the point of introduction being made accordingly.

It is preferred that the extracted, calcined raw meal in a flash pipe is introduced into a stream of mixed air and water causing it to be slaked, that the slaked raw meal is separated in a separating mechanism, and is subsequently conveyed to and ground in a mill.

It is further preferred that the airstream from the flash pipe is used to convey the slaked and ground, calcined raw meal from the mill to the point of introduction.

The overriding objective of the present invention is to remove the SO₂ originating from the raw materials because the SO₂ formed from the fuels in the hotter parts of the kiln system is effectively bonded to Ca(OH)₂ and converted into CaSO₄ which is a solid which will be a constituent component of the finished clinker.

In the following the invention will be explained in further detail with reference to the accompanying diagrammatical drawings, in which:-
Figure1 shows a traditional cement making plant where the method according to the invention is used; and
Figure. 2 shows an especially preferred embodiment of the invention.

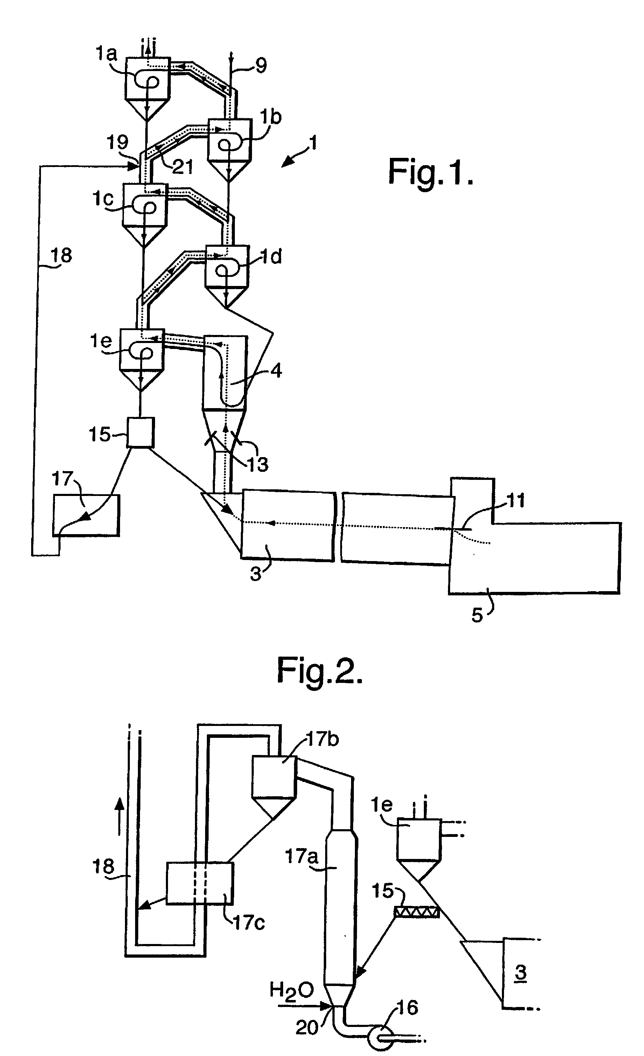

In Figure 1 is seen a cement making plant which comprises a cyclone preheater 1 with five cyclones 1a to 1e, a calciner 4, a rotary kiln 3 and a clinker cooler 5. The plant is run in accordance with traditional operating principles which involves raw material being introduced at an inlet 9 in the inlet duct to the first cyclone stage 1a of the cyclone preheater and heated, calcined and burned into clinker by first being directed through the preheater 1, the calciner 4 and subsequently through the kiln 3 in counterflow with hot exhaust gases which are formed at, respectively, a burner 11 in the rotary kiln 3 and burners 13 in the calciner 4. The burned clinker is subsequently cooled in the clinker cooler 5.

In accordance with the method of the invention, some of the hot, calcined raw meal is extracted from the fifth stage separating cyclone 1 e of the preheater 1 by means of a dosing mechanism 15 which is designed for extracting a controlled stream of material. The stream of material thus extracted is directed to a slaking and grinding apparatus 17 of any suitable kind. For example, this could be a ball mill, a vertical mill, a ring roller mill or a roller press to which water (H₂O) is added, possibly in vaporized form. In an especially preferred embodiment of the invention the apparatus 17, as shown in Fig. 2, comprises a riser pipe or flash pipe 17a with a subsequent separating cyclone 17b and a mill 17c. In this embodiment the extracted, calcined raw meal is introduced into an ascending stream of mixed air and water, thereby causing the raw meal to be slaked. The air is supplied by means of a fan 16 and the water is supplied via an opening 20. The slaked, but still substantially dry, calcined raw meal is subsequently separated in the separating cyclone 17b from where it is conveyed, if convenient via an intermediate bin (not shown) to the mill 17c wherein it is ground to the desired particle size.

From the apparatus 17 the now slaked and ground, calcined raw meal is conveyed, possibly via a scoop device, to an entrance opening 19 which is provided in the outlet duct 21 of the third cyclone stage 1c. In the embodiment shown in Fig. 2, the raw meal is conveyed pneumatically via a duct 18 by means of the airstream from the flash pipe.

After being introduced into the exhaust gases, calcium oxide (CaO) and calcium hydroxide (Ca(OH)₂) will react with the SO₂ present in the exhaust gases and will be converted into calcium sulphite CaSO₃ and/or calcium sulphate CaSO₄. These solids may be a constituent part of the clinker in similarity with other constituent components of the raw materials.

The slaked and ground, calcined raw meal may either be conveyed direct to the entrance opening 19 or it may be conveyed to an intermediate bin, not shown, wherefrom it may subsequently be led by means of a dosing means to the entrance opening. The actual introduction of the material may take place using a special lance which is capable of dispersing the slaked and ground, calcined raw meal across the entire cross-sectional area of the duct 21 in order to optimize the efficiency of the desulphurisation process.

## Claims

1. A method for desulphurisation of exhaust gases from a cement making plant by bonding gaseous sulphur dioxide to calcium-containing cement raw meal which has been extracted from the calcination stage (4) of the plant, slaked and subsequently brought into contact with the exhaust gases as a sulphur-absorbing reactant which method includes pre-heating the raw meal in a preheater (1) prior to burning in a kiln (3), **characterized in that** the extracted raw meal is ground (17) prior to being introduced into the exhaust gases in the preheater (1) at a location (19), viewed in the direction of flow of the exhaust gases, immediately after SO₂ has been formed by partial combustion of the sulphide constituents in the raw materials.

2. A method according to claim 1, **characterized in that** the extracted, calcined raw meal is subjected to a minimum of 80 per cent slaking.

3. A method according to claim 1 or claim 2, **characterized in that** the extracted, calcined raw meal is subjected to full-scale slaking.

4. A method according to any of claims 1 to 3, **characterized in that** the extracted, calcined raw meal is ground to an average particle size of less than 5 µm.

5. A method according to claim 4, **characterized in that** the extracted, calcined raw meal is ground to an average particle size of less than 3 µm.

6. A method according to any of claims 1 to 5, **characterized in that** the extracted, calcined raw meal is introduced into a stream of mixed air and water in a flash pipe (17a), causing it to be slaked, that the slaked raw meal is separated in a separating mechanism (17b), and is subsequently conveyed to and ground in a mill (17c).

7. A method according to claim 6, **characterized in that** the airstream from the flash pipe (17a) is used to convey the slaked and ground, calcined raw meal from the mill (17c) to the point of introduction (19) into the exhaust gases.

8. An apparatus for desulphurisation of exhaust gases from a cement making plant by a method of bonding gaseous sulphur dioxide to calcium-containing cement raw meal, the apparatus including a preheater (1) for pre-heating the raw meal before it is burnt, and means for slaking extracted raw meal prior to bringing it into contact with the exhaust gases, whereby the cement raw meal is extracted from the calcination stage (4) of the plant, slaked, and subsequently brought into contact with the exhaust gases as a sulphur absorbing reactant, **characterized by** means for grinding the extracted raw meal, and means for passing the extracted raw meal to the preheater (1) where it is brought into contact with the exhaust gases at a location (19), viewed in the direction of flow of the exhaust gases, immediately after SO₂ has been formed by partial combustion of the sulphide constituents in the raw materials.

9. Apparatus according to claim 8, **characterized in that** the means for slaking the extracted, calcined raw meal includes a flash pipe (17a).

10. Apparatus according to claim 9, **characterized in that** the means for slaking the extracted, calcined raw meal includes a separating mechanism (17b).

11. Apparatus according to claim 9 or claim 10, **characterized in that** the means for grinding the extracted, calcined raw meal includes a grinding mill (17c).

12. Apparatus according to claim 11, **characterized in that** a duct (18) is used to provide an airstream from the flash pipe (17a) to convey the slaked and ground, calcined raw meal from the mill (17c) to the point of introduction (19) into the exhaust gases.

13. A cement making plant having apparatus according to any of claims 8 to 12.

14. A cement making plant according to claim 13, including a five-stage preheater, **characterized in that** the slaked and ground raw meal is introduced into the exhaust gases immediately prior to the third stage (1c) of the preheater (1).

## Revendications

1. Procédé pour la désulfuration des gaz d'échappement d'une usine de fabrication de ciment en fixant le dioxyde de soufre gazeux à du minerai broyé non traité de ciment contenant du calcium qui a été extrait du niveau de calcination (4) de l'usine, éteint et par la suite mis en contact avec les gaz d'échappement en tant que réactif absorbant le soufre, lequel procédé comprend le préchauffage du minerai broyé non traité dans un préchauffeur (1) avant calcination dans un four de calcination (3), **caractérisé en ce que** le minerai broyé non traité est broyé (17) avant d'être introduit dans les gaz d'échappement dans le préchauffeur (1) à un endroit (19), vu dans la direction du flux des gaz d'échappement, immédiatement après que SO₂ a été formé par combustion partielle des constituants sulfurés dans les matières non traitées.

2. Procédé selon la revendication 1, **caractérisé en ce que** le minerai broyé non traité calciné, extrait est soumis à un minimum de 80 pour-cent d'extinction.

3. Procédé selon la revendication 1 ou 2, **caractérisé en ce que** le minerai broyé non traité calciné, extrait est soumis à une extinction totale.

4. Procédé selon l'une quelconque des revendications 1 à 3, **caractérisé en ce que** le minerai broyé non traité calciné, extrait est broyé à une taille moyenne de particule de moins de 5 µm.

5. Procédé selon la revendication 4, **caractérisé en ce que** le minerai broyé non traité calciné, extrait est broyé à une taille moyenne de particule de moins de 3 µm.

6. Procédé selon l'une quelconque des revendications 1 à 5, **caractérisé en ce que** le minerai broyé non traité calciné, extrait est introduit dans un courant d'air et d'eau mélangés dans un tuyau de détente (17a), provoquant son extinction, que le minerai broyé non traité éteint est séparé dans un mécanisme de séparation (17b), et est ultérieurement porté et broyé dans un broyeur (17c).

7. Procédé selon la revendication 6, **caractérisé en ce que** le filet d'air du tuyau de détente (17a) est utilisé pour porter le minerai broyé non traité calciné, éteint et broyé du broyeur (17c) au point d'introduction (19) dans les gaz d'échappement.

8. Appareil pour la désulfuration des gaz d'échappement d'une usine de fabrication de ciment par un procédé de fixation du dioxyde de soufre à du minerai broyé non traité de ciment contenant du calcium, l'appareil comprenant un préchauffeur (1) pour préchauffer le minerai broyé non traité avant qu'il ne soit brûlé, et des moyens pour éteindre le minerai broyé non traité avant de le mettre en contact avec les gaz d'échappement, moyennant quoi le minerai broyé non traité de ciment est extrait de l'étape de calcination de l'usine (4), éteint, et par la suite mis en contact avec les gaz d'échappement en tant que réactif absorbant le soufre, **caractérisé par** des moyens pour broyer le minerai broyé non traité extrait, et des moyens pour faire passer le minerai broyé non traité vers le préchauffeur (1) où il est mis en contact avec les gaz d'échappement à un en droit (19), vu dans la direction du flux des gaz d'échappement, immédiatement après que SO₂ a été formé par combustion partielle des constituants sulfurés dans les matières non traitées.

9. Appareil selon la revendication 8, **caractérisé en ce que** les moyens pour éteindre le minerai broyé non traité calciné, extrait comprennent un tuyau de détente (17a).

10. Appareil selon la revendication 9, **caractérisé en ce que** les moyens pour éteindre le minerai broyé non traité calciné, extrait comprennent un mécanisme séparateur (17b).

11. Appareil selon la revendication 9 ou 10, **caractérisé en ce que** les moyens pour broyer le minerai broyé non traité calciné, extrait comprennent un broyeur (17c).

12. Appareil selon la revendication 11, **caractérisé en ce qu'**un conduit (18) est utilisé pour fournir un filet d'air provenant du tube de détente (17a) pour porter le minerai broyé non traité calciné, broyé et éteint du broyeur (17c) au point d'introduction (19) dans les gaz d'échappement.

13. Usine de fabrication de ciment ayant un appareil selon l'une quelconque des revendications 8 à 12.

14. Usine de fabrication de ciment selon la revendication 13, comprenant un préchauffeur à cinq étapes, caractérisé

## Patentansprüche

1. Verfahren zur Entschwefelung von Abgasen einer Zementherstellungsanlage durch Binden von gasförmigem Schwefeldioxid an kalziumhaltiges Zementrohmehl, welches der Kalzinierungsstufe (4) der Anlage entnommen, gelöscht und anschließend als Schwefelsorptionsmittel mit den Abgasen in Kontakt gebracht wird, wobei das Verfahren das Vorheizen des Rohmehls in einer Vorheizeinrichtung (1) vor dessen Brennen in einem Ofen (3) beinhaltet, **dadurch gekennzeichnet, dass** das entnommene Rohmehl gemahlen wird (17), bevor es in die in der Vorheizeinrichtung (1) befindlichen Abgase eingebracht wird, und zwar bei einer Stelle (19), die sich in Strömungsrichtung der Abgase gesehen unmittelbar hinter der Stelle befindet, bei der durch teilweises Verbrennen der sulfidischen Bestandteile der Rohmaterialien eine Bildung von SO₂ erfolgt.

2. Verfahren nach Anspruch 1, **dadurch gekennzeichnet, dass** das entnommene kalzinierte Rohmehl einem mindestens 80% -igen Löschen unterzogen wird.

3. Verfahren nach Anspruch 1 oder 2, **dadurch gekennzeichnet, dass** das entnommene kalzinierte Rohmehl einem vollständigen Löschen unterzogen wird.

4. Verfahren nach einem der Ansprüche 1 bis 3, **dadurch gekennzeichnet, dass** das entnommene kalzinierte Rohmehl auf eine durchschnittliche Partikelgröße von weniger als 5 µm gemahlen wird.

5. Verfahren nach Anspruch 4, **dadurch gekennzeichnet, dass** das entnommene kalzinierte Rohmehl auf eine durchschnittliche Partikelgröße von weniger als 3 µm gemahlen wird.

6. Verfahren nach einem der Ansprüche 1 bis 5, **dadurch gekennzeichnet, dass** das entnommene kalzinierte Rohmehl in den Strom eines Luft-Wasser-Gemisches, der in einem Entspannungsrohr (17a) verläuft, eingebracht wird, was bewirkt, dass es gelöscht wird, und dadurch, dass das gelöschte Rohmehl in einer Abscheidevorrichtung (17b) getrennt wird, und anschließend zu einer Mühle (17c) gefördert und in dieser gemahlen wird.

7. Verfahren nach Anspruch 6, **dadurch gekennzeichnet, dass** der vom Entspannungsrohr (17a) kommende Luftstrom genutzt wird, um das gelöschte und gemahlene kalzinierte Rohmehl aus der Mühle (17c) zu dem Punkt (19) zu fördern, bei dem es in die Abgase eingebracht wird.

8. Vorrichtung zur Entschwefelung von Abgasen einer Zementherstellungsanlage mittels eines Verfahrens zum Binden von gasförmigem Schwefeldioxid an kalziumhaltiges Zementrohmehl, wobei die Vorrichtung eine Vorheizeinrichtung (1) zum Vorheizen des Rohmehls vor dessen Brennen und eine Einrichtung beinhaltet, in welcher ein Löschen des entnommenen Rohmehls erfolgt, bevor dieses mit den Abgasen in Kontakt gebracht wird, wobei das Zementrohmehl aus der Kalzinierungsstufe (4) der Anlage entnommen, gelöscht und anschließend als Schwefelsorptionsmittel mit den Abgasen in Kontakt gebracht wird, **gekennzeichnet durch** eine Einrichtung zum Mahlen des entnommenen Rohmehls und eine Einrichtung, welche das entnommene Rohmehl zur Vorheizeinrichtung (1) weiterleitet, bei der es mit den Abgasen in Kontakt gebracht wird, und zwar bei einer Stelle (19), die sich in Strömungsrichtung der Abgase gesehen unmittelbar hinter der Stelle befindet, bei der **durch** teilweises Verbrennen der sulfidischen Bestandteile der Rohmaterialien eine Bildung von SO₂ erfolgt.

9. Vorrichtung nach Anspruch 8, **dadurch gekennzeichnet, dass** die Einrichtung zum Löschen des entnommenen kalzinierten Rohmehls ein Entspannungsrohr (17a) beinhaltet.

10. Vorrichtung nach Anspruch 9, **dadurch gekennzeichnet, dass** die Einrichtung zum Löschen des entnommenen kalzinierten Rohmehls eine Abscheideeinrichtung (17b) beinhaltet.

11. Vorrichtung nach Anspruch 9 oder 10, **dadurch gekennzeichnet, dass** die Einrichtung zum Mahlen des entnommenen kalzinierten Rohmehls eine Mühle (17c) beinhaltet.

12. Vorrichtung nach Anspruch 11, **dadurch gekennzeichnet, dass** ein Kanal (18) verwendet wird, um für einen aus dem Entspannungsrohr (17a) kommenden Luftstrom zu sorgen, der das gelöschte und gemahlene kalzinierte Rohmehl von der Mühle (17c) zu dem Punkt (19) fördert, bei dem das Einbringen in die Abgase erfolgt.

13. Zementherstellungsanlage, welche eine Vorrichtung nach einem der Ansprüche 8 bis 12 aufweist.

14. Zementherstellungsanlage nach Anspruch 13, die eine fünfstufige Vorheizeinrichtung beinhaltet, **dadurch gekennzeichnet, dass** das gelöschte und gemahlene Rohmehl unmittelbar vor der dritten Stufe (1c) der Vorheizeinrichtung (1) in die Abgase eingebracht wird.
